(19) Europäisches Patentamt
European Patent Office
Office européen des brevets

(11) **EP 0 742 429 B1**

(12) **FASCICULE DE BREVET EUROPEEN**

(45) Date de publication et mention
de la délivrance du brevet:
**08.08.2001 Bulletin 2001/32**

(51) Int Cl.⁷: **G01M 3/20**

(21) Numéro de dépôt: **96400965.8**

(22) Date de dépôt: **06.05.1996**

(54) **Détecteur de fuite à gaz traceur**

Spürgas-Leckdetektor

Leak detector with tracer gas

(84) Etats contractants désignés:
**CH DE GB IT LI**

(30) Priorité: **12.05.1995 FR 9505671**

(43) Date de publication de la demande:
**13.11.1996 Bulletin 1996/46**

(73) Titulaire: **ALCATEL**
**75008 Paris (FR)**

(72) Inventeur: **Seigeot, Bertrand**
**74230 Dingy Saint Clair (FR)**

(74) Mandataire: **Vigand, Privat et al**
**COMPAGNIE FINANCIERE ALCATEL**
**Dépt. Propriété Industrielle,**
**30, avenue Kléber**
**75116 Paris (FR)**

(56) Documents cités:
**DE-A- 3 038 089**

## Description

La présente invention concerne un détecteur de fuite à gaz traceur comportant un spectromètre de masse fournissant un signal q proportionnel à la pression partielle de gaz traceur dans le spectromètre.

L'invention propose d'effectuer un traitement du signal q qui est actuellement celui fourni par le détecteur et visualisé sur un cadran analogique ou numérique, traitement ayant pour but d'améliorer les performances du détecteur en fournissant un signal de sortie ayant un meilleur temps de réponse en cas de fuite ainsi qu'une meilleure sensibilité.

L'invention a ainsi pour objet un détecteur de fuite à gaz traceur comportant un spectromètre de masse fournissant un signal q proportionnel à la pression partielle de gaz traceur dans le spectromètre, caractérisé en ce qu'il comprend en outre des moyens pour obtenir à partir de ce signal q un signal $q' = A \frac{dq}{dt}$, A étant un coefficient amplificateur réglable et $\frac{dq}{dt}$ la dérivée par rapport au temps du signal q, et des moyens pour obtenir un signal de sortie appelé signal traité $q_t = q + q'$.

La valeur du gain A est réglée en fonction du type de test effectué : en reniflage, sous vide, etc...

L'invention va maintenant être décrite dans différents cas de test d'étanchéité, en se référant au dessin annexé dans lequel :

La figure 1 est un schéma bloc représentant un détecteur de fuite à gaz traceur selon l'invention.

La figure 2 est un schéma illustrant un test en reniflage.

La figure 3 est un graphique montrant d'une part le signal q fourni par un détecteur de l'art antérieur travaillant en reniflage conformément à la figure 2 lors de la détection d'une fuite, et d'autre part le signal qt fourni dans les mêmes conditions par un détecteur selon l'invention équipé des moyens figurés sur la figure 1.

La figure 4 est un schéma illustrant un détecteur effectuant un test sous vide.

La figure 5 montre les courbes de montée $q_m$ et de descente $q_d$ du signal q ainsi que le signal de sortie $q_t$ correspondant, traité avec les moyens de l'invention.

La figure 6 est un schéma illustrant le cas d'un détecteur effectuant un test d'une pièce située à l'intérieur d'une enceinte étanche.

La figure 7 montre les courbes théoriques du signal du bruit de fond $q_{He}$ et du signal du bruit de fond traité $q_{Het}$.

La figure 8 montre les courbes pratiques de bruit de fond.

La figure 9 montre les courbes q et $q_t$ dans le cas de la figure 6 combinant le bruit de fond avec une fuite.

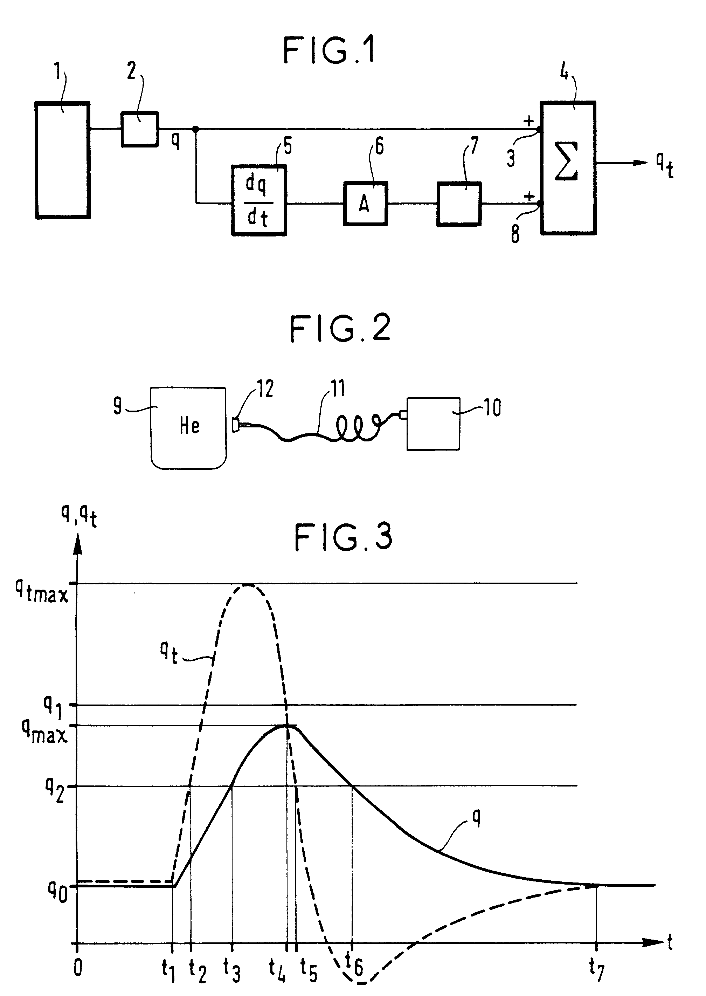

En se référant à la figure 1, on voit un détecteur de fuite selon l'invention qui comporte classiquement un groupe de pompage 1 d'un spectromètre de masse 2 qui fournit en sortie un signal q. Ce signal q est proportionnel à la pression partielle du gaz pour lequel le spectromètre est réglé, présent dans le spectromètre. Le groupe de pompage 1 est celui de n'importe quel détecteur connu et fonctionnant selon les modes connus de détection de fuite : en reniflage, sous vide, etc.

Selon l'invention, des moyens sont ajoutés de façon à obtenir en sortie du détecteur un signal $q_t = q + A \frac{dq}{dt}$.

Ainsi, le signal q est envoyé d'une part vers une première entrée 3 d'un circuit sommateur 4, et d'autre part vers un circuit dérivateur 5. Le signal dérivé est ensuite amplifié par un amplificateur 6 de gain A et envoyé, après passage dans un filtre passe-bas 7 afin d'éliminer les fréquences hautes non caractéristiques d'une fuite, vers une seconde entrée 8 du sommateur 4 à la sortie duquel on obtient le signal de sortie $q_t$. Ce signal, de façon connue, est envoyé vers un appareil de visualisation analogique ou numérique.

Le gain A de l'amplificateur est réglable et il est ajusté selon le mode de test effectué et l'effet désiré.

Les figures 2 et 3 montrent l'application de l'invention au cas d'un test en reniflage : on voit figure 2, une enceinte 9 à contrôler qui a été préalablement pressurisée en gaz traceur, tel que de l'hélium par exemple. Un détecteur 10, tel que celui de la figure 1, est utilisé en mode de reniflage avec une canalisation 11 et une sonde 12. Lorsque la sonde passe devant une fuite, on obtient en sortie du spectromètre 2 (figure 1) un signal q, en fonction du temps t, qui est du type représenté sur la figure 3 (courbe en trait continu référencée q).

La valeur $q_o$ de la courbe q, avant le temps $t_1$ et après le temps $t_7$, correspond à la valeur du signal q en l'absence de fuite, due à la présence de l'hélium dans l'atmosphère. Cette partie du signal est appelé bruit de fond. La présence de ce bruit de fond, intrinsèque au mode de détection en reniflage, est un inconvénient majeur de ce mode de détection par sa moins bonne sensibilité par rapport au test sous vide.

Ce signal q est le signal de sortie d'un détecteur de l'art antérieur connu.

On a représenté également sur cette même figure 3, le signal $q_t = q + A \frac{dq}{dt}$ qui est le signal de sortie du détecteur de l'invention obtenu par le traitement du signal q conformément à la figure 1. Ce signal $q_t$ est représenté en trait interrompu.

Examinons cette figure, et supposons que l'opérateur se soit choisi un seuil de refus de la pièce 9 contrôlée à la valeur $q_1$ : on constate qu'avec le signal q de l'art antérieur, la fuite n'a pas été détectée, seul le signal traité $q_t$ de l'invention a permis de détecter la fuite, la sensibilité est ainsi bien meilleure et le rapport signal sur bruit de fond : $\frac{q_{tmax}}{q_o}$ est aussi bien meilleur.

Si maintenant l'opérateur a choisi au seuil $q_2$ plus bas, on voit que la fuite a été détectée par les deux signaux q et $q_t$, mais bien avant avec le signal $q_t$ : dès le temps $t_2$, et non pas seulement au temps $t_3$. Par ailleurs, le temps au bout duquel le signal est redescendu au-dessous du seuil $q_2$ est également plus court avec le signal traité $q_t$ : dès le temps $t_5$ au lieu de $t_6$ avec le

signal q.

Ainsi, le détecteur de l'invention permet d'augmenter singulièrement les performances d'un test en reniflage, aussi bien en temps de réponse (à l'apparition et à la disparition du signal) qu'en sensibilité en amplifiant les régimes transitoires caractéristiques d'une fuite.

Le gain A de l'amplificateur 6 peut être automatiquement variable en fonction du signe de la valeur de la dérivée du signal q ou même de sa valeur absolue. Ainsi, la valeur négative du signal qt peut être limitée ou évitée en réduisant ce gain A lorsque, après le temps $t_4$, la dérivée du signal q devient négative.

Le filtre 7 (figure 1) est utilisé afin d'éliminer les signaux à fréquence élevée, tels que les parasites électriques, qui ne sont pas caractéristiques d'une fuite.

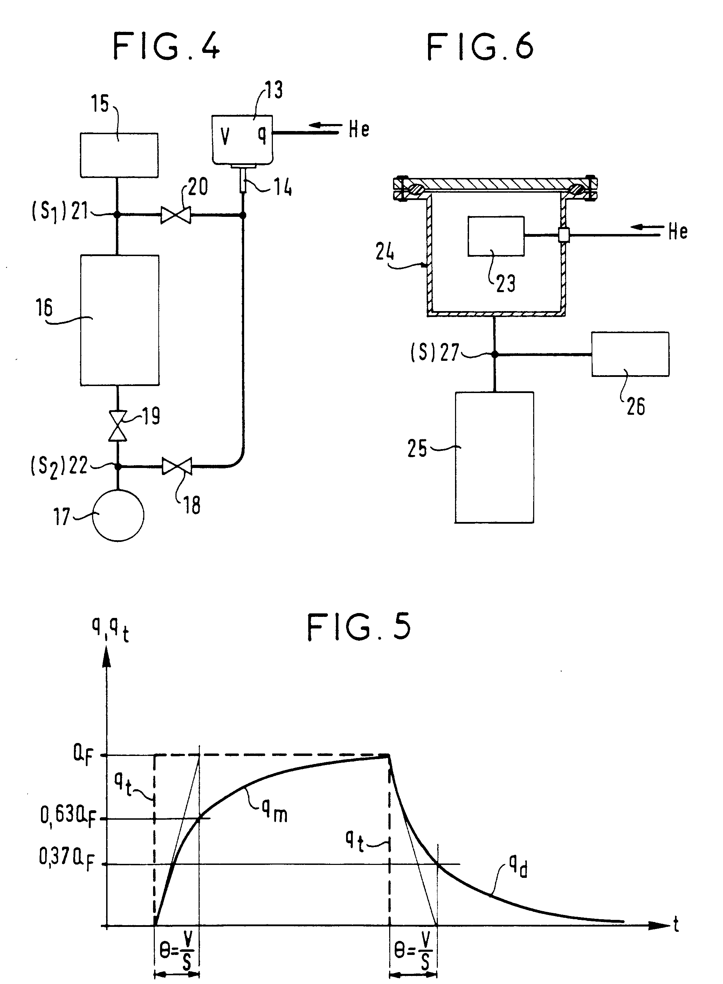

En se référant maintenant aux figures 4 et 5, on va décrire un exemple dans le cas où le détecteur de l'invention est utilisé dans un test sous vide par aspersion.

On a représenté, figure 4, une pièce à tester 13 reliée par une conduite 14 à un détecteur comportant un spectromètre 15 équipé des moyens de traitement du signal q pour obtenir en sortie le signal $q_t$ de l'invention. Le spectromètre 15 est pompé par un groupe de pompage comportant une pompe secondaire 16 et une pompe primaire 17. Des vannes 18, 19 et 20 complètent le détecteur de façon classique.

Après le vide préliminaire effectué dans la pièce 13 à tester par la pompe primaire 17, les vannes 19 et 20 étant fermées et la vanne 18 étant ouverte, on passe en phase de test soit mode direct, les vannes 19 et 20 étant ouvertes et la vanne 18 fermée soit en mode à contre-courant, la vanne 20 étant fermée et les vannes 18 et 19 étant ouvertes.

Dans le premier cas, si la pièce à tester présente une fuite, et qu'elle est aspergée d'hélium, le flux q de fuite passe par le point 21 où la vitesse de pompage est $S_1$. La pression partielle d'hélium $P_{21}$ en ce point est celle qui règne dans le spectromètre 15 et cette pression partielle est $P_{21} = \frac{q}{S_1}$. Si la vitesse de pompage $S_1$ de la pompe 16 est constante, ce qui est approximativement vrai, on voit que la pression partielle $P_{21}$ est proportionnelle au flux de fuite q.

Dans le second cas (test en contre-courant), le flux de fuite q passe par le point 22 où la vitesse de pompage est $S_2$. Ici, la pression partielle d'hélium en 22 est $P_{22} = \frac{q}{S_2}$. Or la pression partielle d'hélium en 21, c'est-à-dire dans le spectromètre 15 est égale à celle en 22 divisée par le rapport de compression de la pompe 16. Ainsi, si la vitesse de pompage $S_2$ de la pompe primaire est constante, ce qui est approximativement le cas, la pression partielle d'hélium mesurée par le spectromètre est ici aussi proportionnelle au flux de fuite q.

On peut donc dire que le spectromètre mesure le flux de fuite q.

Ainsi, si la pièce 13 a un volume interne V et est évacuée par une pompe à vide de vitesse de pompage S et que, présentant une fuite on l'asperge de gaz traceur, le flux de gaz q mesuré par le spectromètre 15 suivra la relation :

$$q = Q_F \left( 1 - e^{-\frac{S}{V}t} \right)$$

$Q_F$ étant la valeur finale du flux.

S étant un débit volumique et V un volume, le rapport $\frac{V}{S} = \theta$ est homogène à un temps.

En remplaçant $\frac{V}{S}$ par $\theta$ dans cette relation on obtient

$$q = Q_F \left( 1 - e^{-\frac{t}{\theta}} \right)$$

si l'on fait $t = \theta$, on obtient $q = 0{,}63\ Q_F$. Ce temps $\theta$ est appelé le temps de réponse. C'est celui qui est nécessaire pour atteindre 63 % de la valeur finale $Q_F$ du signal q.

De même, lorsque l'on arrête d'asperger la fuite, le flux de fuite mesuré par le détecteur décroît de la façon suivante :

$$q = Q_F e^{-\frac{S}{V}t} \rightarrow q = Q_F e^{-\frac{t}{\theta}}$$

si l'on fait $t = \theta$ on obtient $q = 0{,}37\ Q_F$.

Sur la figure 5, on a représenté ces deux courbes q de montée : $q_m$ et de descente : $q_d$ du signal q en trait continu fort. Il s'agit du signal q de la figure 2 fourni en sortie d'un détecteur de fuite de l'art antérieur. Sur ce graphique, on a porté le temps $\theta = \frac{V}{S}$ que l'on appelle le temps de réponse. C'est le temps qu'il faut pour atteindre, à partir du début de l'aspersion 63 % de la valeur du signal final de valeur $Q_F$. C'est aussi le temps au bout duquel, après l'arrêt de l'aspersion, le signal est redescendu à 37 % de sa valeur maximale.

Si le volume V de la pièce à tester est de 120 litres, et que la vitesse de pompage S est de 2 litres par seconde, on a $\frac{V}{S} = \theta = 60$ secondes.

Ce temps est très long.

Avec le détecteur de l'invention, le signal de sortie $q_t = q + A \frac{dq}{dt}$

Dans ce test, sous vide, on choisira comme valeur A du gain de l'amplificateur 6, la valeur $\theta$, on aura donc $A = \frac{V}{S} = \theta$,

donc

$$q_t = q + \theta \frac{dq}{dt}$$

à l'établissement du signal on a vu que

$$q = Q_F \left( 1 - e^{-\frac{t}{\theta}} \right)$$

on a donc :

$$q_t = Q_F \left( 1 - e^{-\frac{t}{\theta}} \right) + \theta . \frac{Q_F}{\theta} e^{-\frac{t}{\theta}}$$

$$q_t = Q_F - Q_F e^{-\frac{t}{\theta}} \theta + Q_F e^{-\frac{t}{\theta}} = Q_F$$

$$q_t = Q_F$$

Le signal traité qt est immédiatement égal à la valeur finale $Q_F$.

De même, à la disparition du signal, on a vu que

$$q = Q_F e^{-\frac{t}{\theta}}$$

On a donc :

$$q_t = q + \theta \frac{dq}{dt}$$

$$= Q_F e^{-\frac{t}{\theta}} + \theta \left( \frac{-Q_F}{\theta} \right) e^{-\frac{t}{\theta}}$$

$$= Q_F e^{-\frac{t}{\theta}} - Q_F e^{-\frac{t}{\theta}} = 0$$

$q_t = 0$

Le signal traité $q_t$ revient immédiatement à 0 dès la fin de l'aspersion de la pièce ayant une fuite.

Ce signal de sortie $q_t$ du détecteur de l'invention est représenté en pointillés sur la figure 5.

Ainsi dans le test sous vide, l'invention permet d'avoir une réponse théorique instantanée, à condition de connaître le temps de réponse $\theta = \frac{V}{S}$ et de choisir comme gain A de l'amplificateur 6 cette valeur $\theta$.

Or la vitesse de pompage S est généralement connue, et on peut généralement, au moins approximativement, connaître le volume V de la pièce à tester.

Ainsi, avec un petit détecteur, avec une faible vitesse de pompage, on peut obtenir des temps de réponses bien inférieurs à ceux d'un détecteur beaucoup plus gros et performant. La localisation de la fuite devient beaucoup plus facile.

Enfin, examinons, en se référant aux figures 6 à 9, le cas où la pièce à tester 23 est placée sous une enceinte étanche 24 dont l'air est évacué par un groupe de pompage 25. La cellule de mesure est représentée en 26.

Soit V le volume de l'enceinte 24 (non compris le volume de la pièce 23) et soit S la vitesse de pompage au point 27 et $P_i$ la pression initiale d'air dans l'enceinte 24.

Le flux d'air $q_{air}$ pompé en 27 est : $q_{air} = S.P_{air}$.

La concentration naturelle d'hélium dans l'air étant de $5.10^{-6}$, on a : $q_{He} = S.P_{air}.5.10^{-6}$.

Par ailleurs, la pression d'air $P_{air}$ en fonction du temps dans l'enceinte 24 est donnée par la relation :

$$P_{air} = P_i \times e^{-\frac{S}{V}t}$$

On a donc :

$$q_{He} = 5.10^{-6} S.P_i e^{-\frac{S}{V}t}$$

$$q_{He} = k\, e^{-\frac{S}{V}t}$$

ce flux d'hélium correspondant à l'hélium naturel de l'air est mesuré par la cellule 26, c'est le bruit de fond qui va en décroissant.

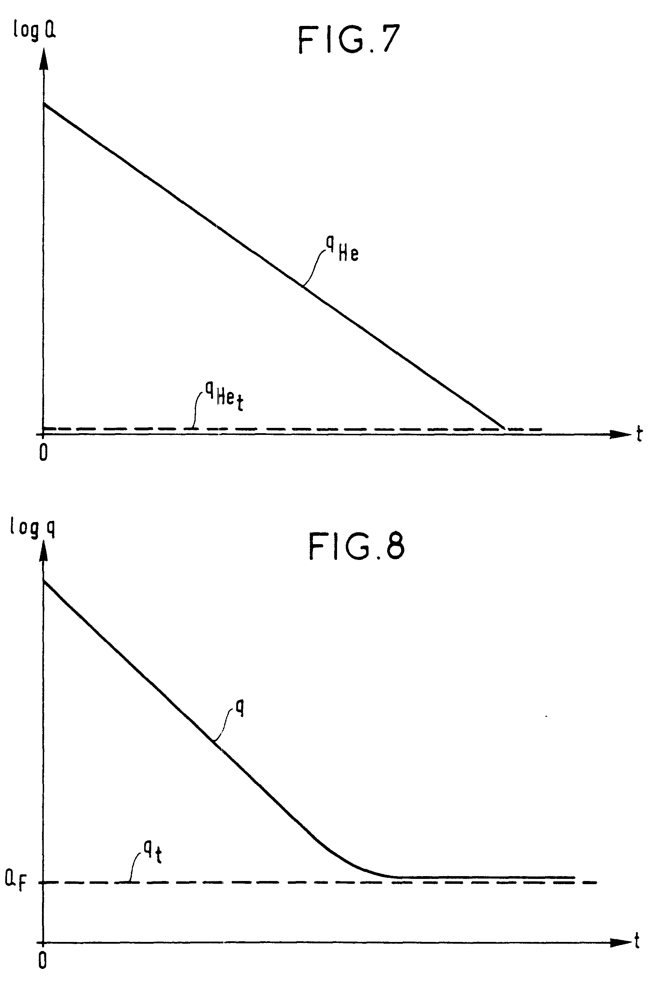

Ce bruit de fond est représenté en trait continu sur la figure 7 dans laquelle l'axe des abscisses représente le temps, et l'axe des ordonnées log $q_{He}$. Ce signal $q_{He}$, traité par le moyen de l'invention devient

$$q_{Het} = q_{He} + A \frac{dq_{He}}{dt}$$

$$q_{Het} = q_{He} + A\left(-\frac{kS}{v}e^{-\frac{S}{V}t}\right)$$

on pose $\frac{V}{S} = \theta$

On a

$$q_{Het} = k\,e^{-\frac{t}{\theta}} + A\left(-\frac{k}{\theta}e^{-\frac{t}{\theta}}\right)$$

si l'on choisit $A = \theta$

on a : $q_{Het} = O$

Le bruit de fond dû à l'hélium de l'air est immédiatement annulé. Ainsi, n'étant pas gêné par le bruit de fond, on peut effectuer le test alors même que la pression dans l'enceinte 24 est encore élevée.

En pratique, il existe un bruit de fond résiduel dû au dégazage des parois et/ou des joints élastomères présents dans la chambre 24. En outre, si la pièce 23 présente une fuite et que l'hélium est présent dans la pièce à tester dès le départ, le flux q mesuré sera en finale $Q_F$. ($Q_F$ étant la somme du bruit de fond résiduel et de la fuite finale à l'état stable).

On a alors

$$q = q_{He} + Q_F = Ke^{-\frac{S}{V}t} + Q_F$$

et le signal traité $q_t$ est alors :

$$q_t = q + A\frac{dq}{dt} \text{ en faisant } A = \theta = \frac{V}{S} \text{ on a :}$$

$$q_t = k\,e^{-\frac{t}{\theta}} + Q_F + \theta\left(\frac{-k}{\theta}e^{-\frac{t}{\theta}}\right)$$

$q_t = Q_F$

Ces deux courbes q et $q_t$ (logq et log$q_t$) sont représentées figure 8. Ainsi, dès le début du pompage, on voit clairement la fuite ou le bruit de fond résiduel (où la somme des deux) car le signal traité $q_t$ élimine le bruit de fond dû à l'hélium de l'air dans l'enceinte 24.

Si l'hélium n'est pas présent dans la pièce à tester 23 dès le départ, mais qu'il est injecté au temps $t_1$, après un certain temps de pompage on obtient l'effet suivant sur le signal traité $q_t$ (en choisissant toujours comme valeur du gain A la valeur $\theta = \frac{V}{S}$) :

- suppression du bruit de fond dû à l'hélium de l'air de l'enceinte 24,
- apparition immédiate du bruit de fond résiduel final $q_r$,
- apparition, dès l'instant $t_1$ d'injection du gaz traceur (He) dans la pièce à tester 23, du signal final $Q_F = q_r + q_{fuite\ finale}$

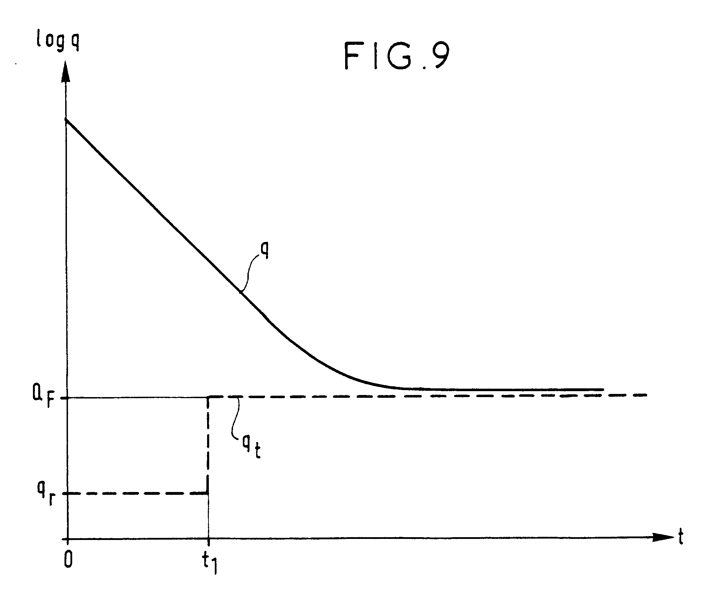

La figure 9 montre le signal q et le signal $q_t$ (logq et log$q_t$) fourni par l'invention en sortie du sommateur 4.

On voit ainsi clairement la différence au niveau de la perception de la fuite qui apparaît avec un rapport signal/bruit de fond très élevé dans le cas du signal traité $q_t$, mais au contraire reste longtemps masqué par le bruit de fond dû à l'hélium de l'air dans le cas du signal q non traité de l'art antérieur.

Dans le cas où l'on effectue un test sous vide comme sur la figure 4, mais où l'on arrose la pièce d'hélium avant d'avoir évacué complètement l'air de la pièce, on obtient la même courbe que sur la figure 9.

Ainsi, on voit tous les avantages du détecteur selon l'invention qui permet :

- un gain de cadence,
- une réduction de la puissance, et donc des coûts des systèmes de pompage,
- une mesure plus fiable,
- la possibilité d'exploiter au maximum les possibilités de test sous vide à haute pression par le fait qu'on élimine le bruit de fond,
- une amélioration du temps de réponse et de la sensibilité en test par reniflage,
- l'extension des capacités de test des détecteurs à de plus gros volumes sans pompage supplémentaire.

## Revendications

1. Détecteur de fuite à gaz traceur comportant un spectromètre de masse (2) fournissant un signal q proportionnel à la pression partielle de gaz traceur dans le spectromètre, caractérisé en ce qu'il comprend en outre des moyens (5, 6) pour obtenir à partir de ce signal q un signal $q' = A\frac{dq}{dt}$, A étant un coefficient amplificateur réglable et $\frac{dq}{dt}$ la dérivée par rapport au temps du signal q, et des moyens (4) pour obtenir un signal de sortie appelé signal traité $q_t = q + q'$.

2. Détecteur de fuite selon la revendication 1 utilisé pour effectuer un test d'étanchéité sur une pièce (13) de volume interne V qui, au moment de la mesure, est relié à une pompe à vide (19 ou 21) du détecteur ayant à l'aspiration une vitesse de pom-

page S (S$_2$ ou S$_1$), l'aspiration de ladite pompe étant en outre reliée directement, ou par l'intermédiaire d'une ou plusieurs autres pompes en série, audit spectromètre de masse (15), caractérisé en ce que ledit coefficient A est choisi égal à $\frac{V}{S}$.

3.  Détecteur de fuite selon la revendication 1 utilisé pour effectuer un test d'étanchéité sur une pièce (23) pressurisée en gaz traceur et placée dans une enceinte étanche (24) de volume interne, hors ladite pièce, égale à V qui, au moment de la mesure, est reliée à une pompe à vide (25) du détecteur ayant à l'aspiration une vitesse de pompage S, l'aspiration de ladite pompe étant en outre reliée, directement ou par l'intermédiaire d'une ou plusieurs autres pompes en série, audit spectromètre de masse (26), caractérisé en ce que ledit coefficient A est choisi égal à $\frac{V}{S}$.

## Claims

1.  A tracer gas leak detector comprising a mass spectrometer (2) delivering a signal q proportional to the partial pressure of the tracer gas in the spectrometer, characterized in that the detector further includes means (5, 6) for obtaining from said signal q a signal

$$q' = A \frac{dq}{dt}$$

where A is an adjustable amplifier coefficient and dq/dt is the time derivative of the signal q, and means (4) for obtaining an output signal referred to as the processed signal of the form q$_t$ = q + q'.

2.  A leak detector according to claim 1, used for performing a leak test on a part (13) of internal volume V which, while measurement is being performed, is connected to a vacuum pump (19 or 21) of the detector providing a suction pumping speed S (S$_2$ or S$_1$), the suction of said pump also being connected directly, or via one or more other pumps in series, to said mass spectrometer (15), characterized in that said coefficient A is selected to be equal to V/S.

3.  A leak detector according to claim 1, used for performing a leakage test on a part (23) pressurized with tracer gas and placed in a sealed enclosure (24) of internal volume, not including said part, equal to V, and connected, while measurement is being performed, to a vacuum pump (25) of the detector providing suction at a pumping speed S, the suction of said pump being also connected, either directly or via one or more other pumps in series, to said mass spectrometer (26), the detector being characterized in that said coefficient A is selected to be equal to V/S.

## Patentansprüche

1.  Spürgas-Leckdetektor, mit einem Massenspektrometer (2), welches ein Signal q proportional zum partiellen Druck des Spürgases in dem Spektrometer liefert, dadurch gekennzeichnet, dass er andererseits Einrichtungen (5, 6) umfasst, um ausgehend von dem Signal q ein Signal $q' = A \frac{dq}{dt}$ zu erhalten, wobei A ein regelbarer Verstärkungskoeffizient ist und $\frac{dq}{dt}$ die Ableitung bezüglich der Zeit des Signals q, und Einrichtungen (4), um ein Ausgangssignal zu erhalten, das als bearbeitetes Signal q$_t$ = q + q' bezeichnet wird.

2.  Leckdetektor nach Anspruch 1, verwendet zur Durchführung eines Dichtetests an einem Bauteil (13) mit dem inneren Volumen V, das, im Moment der Messung, mit einer Vakuum-Pumpe (19 oder 21) des Detektors verbunden ist, die beim Ansaugen eine Pumpgeschwindigkeit S (S$_2$ oder S$_1$) hat, wobei die Ansaugung der Pumpe unter anderem direkt oder mittels einer oder mehrerer anderer in Reihe geschalteter Pumpen, mit dem Massenspektrometer (15) verbunden ist, dadurch gekennzeichnet, dass der Koeffizient A gleich $\frac{V}{S}$ gewählt ist.

3.  Leckdetektor nach Anspruch 1, verwendet zur Durchführung eines Dichtetests an einem Bauteil (23), das mit einem Spürgas beaufschlagt ist und in einem dichten Behälter (24) angeordnet ist, das, ohne das Bauteil, ein Volumen V hat und im Moment der Messung mit einer Vakuum-Pumpe (25) des Detektors verbunden ist, das beim Ansaugen eine Pumpgeschwindigkeit S hat, wobei die Ansaugung der Pumpe unter anderem direkt oder mittels einer oder mehrerer in Reihe geschalteter Pumpen, mit dem Massenspektrometer (26) verbunden ist, dadurch gekennzeichnet, dass der Koeffizient A gleich $\frac{V}{S}$ gewählt ist.

# FIG.1

# FIG.2

# FIG.3

# FIG.4

# FIG.6

# FIG.5

# FIG.7

$\log Q$

$q_{He}$

$q_{He_t}$

$t$

0

# FIG.8

$\log q$

$q$

$q_t$

$Q_F$

$t$

0

FIG.9